# EUROPEAN PATENT APPLICATION

(11) **EP 3 826 140 A1**
(43) Date of publication of application: **26.05.2021**
(21) Application number: 18931178.0
(22) Date of filing: 21.08.2018
(51) Int. Cl.: H02J 50/12

(54) **POWER RECEPTION DEVICE**

(71) Applicant: Mitsubishi Electric Corporation, Tokyo 100-8310 (JP)
(72) Inventor: OTSUBO, Fumie, Tokyo 100-8310 (JP); SHIMURA, Ryo, Tokyo 100-8310 (JP); MAMADA, Daichi, Tokyo 100-8310 (JP); AKUZAWA, Yoshiyuki, Tokyo 102-0073 (JP)
(74) Representative: Pfenning, Meinig & Partner mbB
(86) International application number: PCT/JP2018/030816
(87) International publication number: WO 2020/039502

(57) **Abstract**

Included are: a reception antenna (211) capable of receiving power from a transmission antenna (12) in a non-contact manner; and a closed-curve structure which does not form a short loop and at least a part of which is formed of a conductive material, the closed-curve structure being formed at a position where, when the reception antenna (211) is installed at a position where power can be received from the transmission antenna (12), the closed-curve structure interlinks with a magnetic field generated by the transmission antenna (12).

## Description

### TECHNICAL FIELD

The present invention relates to a power reception device for receiving power by non-contact power feeding.

### BACKGROUND ART

In the related art, in power reception devices having a reception antenna for receiving power by non-contact power feeding, there is known technology for preventing an eddy current from being generated in a metal body included in the power reception device to prevent power loss.

For example, Patent Literature 1 discloses technology of including a magnetic sheet in an electronic device such as a portable terminal device that receives power from a charger in a non-contact manner in order to reduce generation of a diamagnetic field generated by an eddy current that flows through metal around a coil, and that is caused by a magnetic flux generated in the coil. According to the technology disclosed in Patent Literature 1, the magnetic sheet improves the power transmission efficiency of non-contact charging using the action of electromagnetic induction, and increases a magnetic flux generated in a planar coil, thereby preventing a magnetic flux leakage to the back side of the magnetic sheet from the planar coil. Note that the "coil" in Patent Literature 1 corresponds to the "reception antenna" mentioned above.

### CITATION LIST

### PATENT LITERATURE

Patent Literature 1: JP 2012-191847 A

### SUMMARY OF INVENTION

### TECHNICAL PROBLEM

In the prior art represented by the technology of electronic devices as disclosed in Patent Literature 1, there is a disadvantage that no consideration is made on the reduction in the power transmission efficiency for example in a case where a power reception device includes a closed-curve structure other than a reception antenna and the closed-curve structure forms a conductive short loop (hereinafter, simply referred to as a "short loop").

In a resonance-type non-contact power feeding system, when a magnetic field generated by a reception antenna interlinks with a short loop, an induced current flows through the short loop. When an induced current flows through the short loop, power is consumed by the parasitic resistance of the short loop. Due to such an influence by power consumption by the short loop, the power transmission efficiency between the transmission antenna and the reception antenna drops significantly.

The present invention has been made to solve the disadvantage as described above, and it is an object of the present invention to provide a power reception device for receiving power by non-contact power feeding, the power reception device for preventing a reduction in the power transmission efficiency.

### SOLUTION TO PROBLEM

A power reception device according to the present invention includes: at least one reception antenna capable of receiving power from a transmission antenna in a non-contact manner; and a closed-curve structure which does not form a short loop and at least a part of which is formed of a conductive material, the closed-curve structure being formed at a position where, when the reception antenna is installed at a position where power can be received from the transmission antenna, the closed-curve structure interlinks with a magnetic field generated by the transmission antenna.

### ADVANTAGEOUS EFFECTS OF INVENTION

According to the present invention, the closed-curve structure included in the power reception device does not form a short loop, the closed-curve structure being formed at a position where, when the power reception device for receiving power by non-contact power feeding is installed at a position where power can be received from the transmission antenna, the closed-curve structure interlinks with a magnetic field generated by the transmission antenna. As a result, it is possible to prevent a reduction in the power transmission efficiency in the power reception device.

### BRIEF DESCRIPTION OF DRAWINGS

FIG. 1 is a diagram for describing an outline of a general non-contact power feeding system.
FIG. 2 is a diagram for explaining a concept of power transmission of non-contact power feeding performed by a power transmitter to a power reception device in the non-contact power feeding system as described by referring to FIG. 1.
FIG. 3 is a diagram for explaining an exemplary concept of a distribution of a magnetic field generated by a transmission antenna and a reception antenna in the non-contact power feeding system as described by referring to FIG. 1.
FIG. 4 is a diagram for explaining an exemplary concept of power transmission between the transmission antenna and the reception antenna when a power reception device having a closed-curve structure is installed in an area where power can be received in the non-contact power feeding system as described by referring to FIG. 1.
FIGS. 5A to FIG. 5E are diagrams illustrating exemplary home electric appliances each having a closed-curve structure, other than a television.
FIG. 6 is a diagram illustrating an exemplary concept of a closed-curve structure in which an insulation measure is applied so as not to form a short loop in the first embodiment.
FIG. 7 is a diagram illustrating an exemplary concept of a configuration of a non-contact power feeding system including multiple transmission antennas.
FIG. 8 is a diagram illustrating an exemplary concept of a configuration of a non-contact power feeding system including a power reception device including multiple reception antennas.
FIG. 9 is a diagram illustrating a concept of an exemplary configuration of a non-contact power feeding system in which the area of a reception antenna is larger than the area of a transmission antenna.

### DESCRIPTION OF EMBODIMENTS

To describe the present invention further in detail, an embodiment for carrying out the present invention will be described below by referring to the accompanying drawings.

### First Embodiment

In the following first embodiment, as an example, it is assumed that a non-contact power feeding scheme of a resonance type is employed in a non-contact power feeding system.

A power reception device according to the first embodiment is included as a part of a non-contact power feeding system, and receives power, in a non-contact manner, from a power transmitter installed in a structural object included in a building such as a floor or a wall of the building. The power transmitter is not limited to those installed in a structural object, and may be, for example, included in a portable charger. The power reception device according to the first embodiment is only required to be able to receive power from the power transmitter in a non-contact manner. Note that, in the first embodiment, a structural object refers to a structural object that is included in a building, such as a floor or a wall of the building.

It is assumed that the power reception device according to the first embodiment includes a closed-curve structure, at least a part of which is formed of a conductive material. The closed-curve structure includes, for example, in addition to cases where a member included in the power reception device has a closed curve shape, cases where the shape formed of a paint applied on a member included in the power reception device or by a tape attached on the member is a closed curve shape.

It is also assumed that the closed-curve structure is formed at a position where, when the power reception device is installed in an area where non-contact power feeding can be performed, the closed-curve structure interlinks with a magnetic field generated by a transmission antenna. If the closed-curve structure forms a short loop, a current flows through the short loop when a magnetic field generated by a reception antenna interlinks with the short loop. When a current flows through the short loop, power is consumed by the parasitic resistance of the short loop. Due to the influence of such power consumption by the short loop, the transmission efficiency of power received by the power reception device is significantly reduced.

The power reception device according to the first embodiment includes a closed-curve structure at a position where, when the power reception device is installed in an area where non-contact power feeding is possible, the closed-curve structure interlinks with a magnetic field generated by a transmission antenna; however, the closed-curve structure does not form a short loop. Therefore, it is possible to prevent a decrease in the power transmission efficiency in the power reception device. Details will be described later.

First, the outline of a non-contact power feeding system and the outline of power transmission in the non-contact power feeding system will be described as a premise.

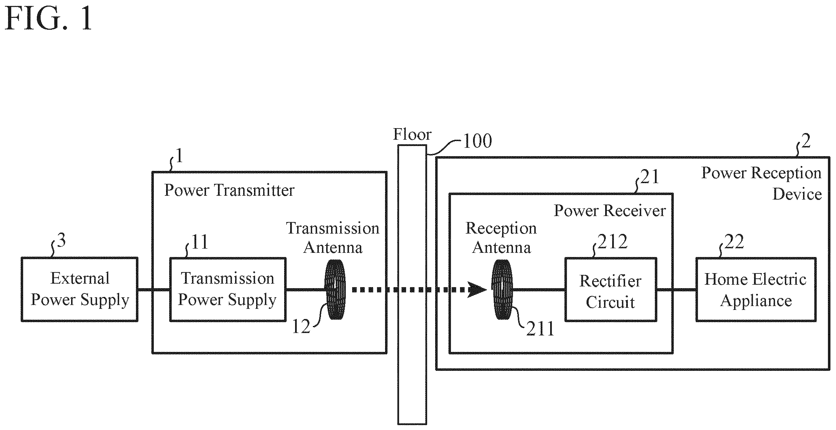

FIG. 1 is a diagram for describing the outline of a general non-contact power feeding system.

A power reception device 2 according to the first embodiment is included in the general non-contact power feeding system as illustrated in FIG. 1. The non-contact power feeding system includes the power reception device 2 and a power transmitter 1.

Note that in the non-contact power feeding system illustrated in FIG. 1, the power transmitter 1 is installed inside a floor 100 as an example. The power transmitter 1 feeds power to the power reception device 2 via the floor 100 in a non-contact manner.

The power transmitter 1 includes a transmission power supply 11 and a transmission antenna 12, receives power supplied from an external power supply 3 such as a commercial power supply, and feeds power to the power reception device 2 installed in an area where power can be received. Specifically, the transmission power supply 11 receives power and supplies high-frequency AC power (hereinafter referred to as "high-frequency power") to the transmission antenna 12. The transmission antenna 12, which has been supplied with the high-frequency power from the transmission power supply 11, resonates at the same frequency as the frequency of the high-frequency power and generates a magnetic field in space. When the power reception device 2 is installed in an area where power can be received from the transmission antenna 12, the magnetic field generated by the transmission antenna 12 interlinks with a reception antenna 211, and the reception antenna 211 resonates at the same frequency as that of the interlinking magnetic field, thereby causing power feeding to a power receiver 21 included in the power reception device 2 to be performed in a non-contact manner. In this manner, non-contact power feeding from the power transmitter 1 to the power reception device 2 is performed.

The power reception device 2 includes the power receiver 21 and a home electric appliance 22. The power receiver 21 includes the reception antenna 211 and a rectifier circuit 212. Note that, in FIG. 1, the power receiver 21 and the home electric appliance 22 are separate devices; however this is merely an example, and the power receiver 21 may be incorporated in the home electric appliance 22 to configure an integrated power reception device 2.

The power reception device 2 receives power from the power transmitter 1 in a non-contact manner. Specifically, the power receiver 21 receives power from the transmission power supply 11 through the transmission antenna 12 and the reception antenna 211 in a non-contact manner.

The reception antenna 211 interlinks with the magnetic field generated by the transmission antenna 12 which has been supplied with the high-frequency power, resonates at the same frequency as that of the interlinking magnetic field, and thereby receives power from the transmission antenna 12 in a non-contact manner.

The power received by the reception antenna 211 is supplied to the home electric appliance 22 by the rectifier circuit 212.

It becomes possible for the home electric appliance 22 to operate with the power received by the power receiver 21. Note that, in the first embodiment, the home electric appliance 22 is not limited to electric devices used exclusively in ordinary households, but also includes various electric devices in general.

Since the non-contact power feeding scheme of a resonance type is existing technology, detailed description of the technology is omitted.

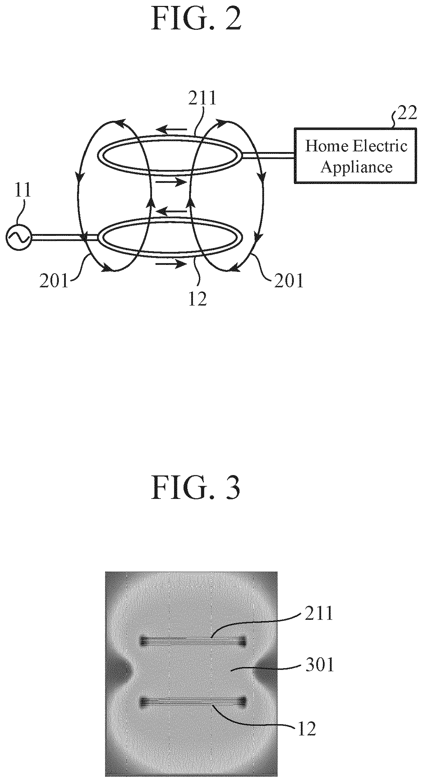

FIG. 2 is a diagram for explaining a concept of power transmission of non-contact power feeding performed by the power transmitter 1 to the power reception device 2 in the non-contact power feeding system as described by referring to FIG. 1.

When the transmission antenna 12 generates a magnetic field in the non-contact power feeding system, power is transmitted to the home electric appliance 22 via the reception antenna 211 due to lines of magnetic force 201 as illustrated in FIG. 2. Note that, in FIG. 2, the lines of magnetic force 201 each illustrate only one direction; however, the line of magnetic force 201 is actually generated in the opposite direction since the power the reception antenna 211 receives from the transmission antenna 12 is AC power.

FIG. 3 is a diagram for explaining an exemplary concept of a distribution of a magnetic field generated by the transmission antenna 12 and the reception antenna 211 in the non-contact power feeding system as described by referring to FIG. 1. Note that in FIG. 3, the magnetic field distribution is denoted by 301.

The magnetic field is generated around the transmission antenna 12 and the reception antenna 211 such as between the transmission antenna 12 and the reception antenna 211, on the side of the transmission antenna 12, on the side of the reception antenna 211, on the back side of the transmission antenna 12, and on the back side of the reception antenna 211, and particularly over a wide area on the back side of the reception antenna 211.

Note that the back side of the transmission antenna 12 refers to an area opposite to the reception antenna 211 with respect to the transmission antenna 12, and the back side of the reception antenna 211 refers to an area opposite to the transmission antenna 12 with respect to the reception antenna 211.

The outline of the non-contact power feeding system and the outline of power transmission in the non-contact power feeding system are as described by referring to FIGS. 1 to 3.

Next, the principle in the non-contact power feeding system as described by referring to FIG. 1 will be described how an induced current flows through the closed-curve structure when the power reception device 2 including the closed-curve structure is installed in an area where power can be received.

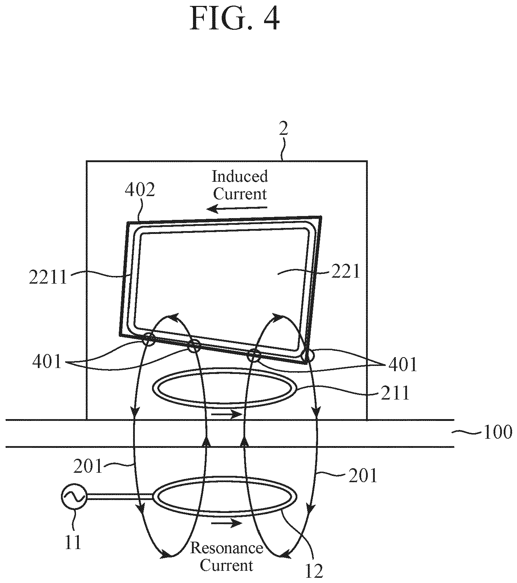

FIG. 4 is a diagram for explaining an exemplary concept of power transmission between the transmission antenna 12 and the reception antenna 211 when the power reception device 2 having the closed-curve structure is installed in an area where power can be received in the non-contact power feeding system as described by referring to FIG. 1. Note that no insulation measure is applied here in the power reception device 2 in order to explain the principle how an induced current flows through the closed-curve structure.

FIG. 4 illustrates an example in which the home electric appliance 22 is a television 221 and the television 221 includes a metal frame 2211 as a closed-curve structure. The whole metal frame 2211 illustrated in FIG. 4 is made of a metal material and forms a short loop (see 402 in FIG. 4). In FIG. 4, a cross-sectional view of the floor 100 is illustrated.

When the power reception device 2 including the television 221 including the metal frame 2211 is installed in an area where power can be received, the lines of magnetic force 201 of the magnetic field generated by the transmission antenna 12 interlink with the metal frame 2211 (see 401 in FIG. 4). When the lines of magnetic force 201 and the metal frame 2211 interlink, an induced current flows through the metal frame 2211. When the current flows through the metal frame 2211, power is consumed by the parasitic resistance of the metal frame 2211.

When the metal frame 2211 consumes power, the power transmission efficiency from the transmission antenna 12 to the reception antenna 211 is significantly reduced.

Note that, in FIG. 4, the case where the home electric appliance 22 is the television 221 is illustrated as an example; however, it is not limited thereto, and in various home electric appliances 22 each including a closed-curve structure that forms a short loop, the power transmission efficiency is significantly reduced as described by referring to FIG. 4 when the power reception device 2 is installed in an area where power can be received.

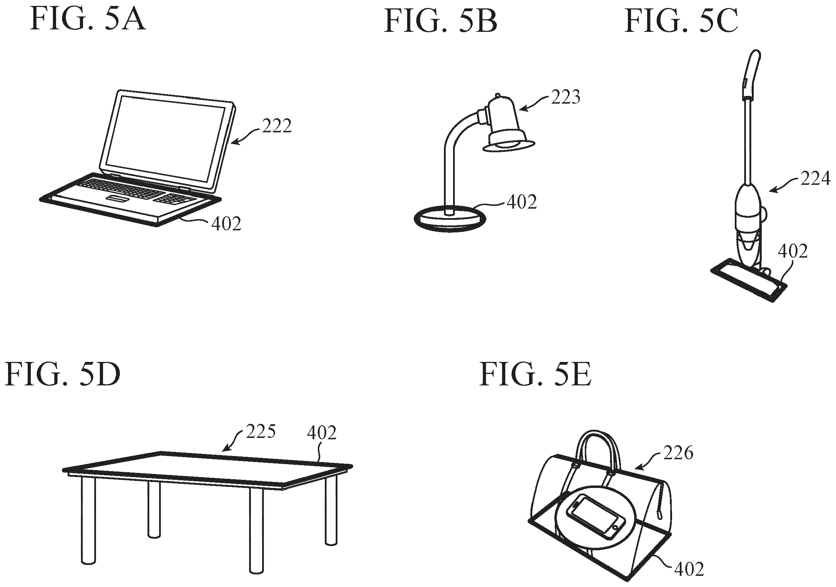

FIGS. 5A to 5E are diagrams illustrating examples of the home electric appliance 22 having a closed-curve structure, other than the television 221.

Examples of the home electric appliance 22 other than the television 221 include a personal computer (PC) 222 capable of receiving power in a non-contact manner, the housing of which includes a frame using a conductive material, or the housing of which is framed with a paint or the like using a conductive material (see FIG. 5A). Note that, in the first embodiment, being "framed" is included in a "frame".

As another example of the home electric appliance 22 other than the television 221, there is a desk lamp 223 capable of receiving power in a non-contact manner, the base of which includes a frame using a conductive paint, or the housing of which is framed with a paint or the like using a conductive material (see FIG. 5B).

As still another example of the home electric appliance 22 other than the television 221, there is a vacuum cleaner 224 capable of receiving power in a non-contact manner, the head of which includes a frame using a conductive material, or the housing of which is framed with a paint or the like using a conductive material (see FIG. 5C).

As yet another example of the home electric appliance 22 other than the television 221, there is a table 225 as the power reception device 2 capable of receiving power in a non-contact manner, the top plate of which includes a frame using a conductive paint, or the housing of which is framed with a paint or the like using a conductive material (see FIG. 5D).

As still yet another example of the home electric appliance 22 other than the television 221, there is a bag 226 as the power reception device 2 capable of receiving power in a non-contact manner, the bottom of which includes a metal wire (see FIG. 5E). The metal wire is included in the bag 226 as a frame of the bottom of the bag 226.

In FIGS. 5A, 5B, 5C, and 5E, the closed-curve structure is the frame that defines a first surface that comes into contact with a second surface when the power reception device 2 is installed on the second surface, the second surface being where the reception antenna 211 can receive power from the transmission antenna 12. The surface on which the power reception device 2 is installed is, for example, a desk surface, a floor surface, or the like.

Among the above, it is assumed in FIG. 5B that the power reception device 2 includes a base or a pedestal, and the closed-curve structure is the frame of the base or the pedestal.

When the PC 222, the desk lamp 223, the vacuum cleaner 224, the table 225 as the power reception device 2, or the bag 226 as the power reception device 2 described above is installed in an area where power can be received, a current flows through the short loop formed by the closed-curve structure (see 402 in FIG. 5), thereby causing a significant decrease in the power transmission efficiency.

As described by referring to FIGS. 4 and 5, in the non-contact power feeding system, an induced current flows in the closed-curve structure when the power reception device 2 having the closed-curve structure that forms a short loop is installed in an area where power can be received, and as a result, the power transmission efficiency is significantly reduced.

In consideration of the above phenomenon, the power reception device 2 according to the first embodiment is obtained by providing the power reception device 2 as described using FIGS. 4 and 5 with a configuration in which although the power reception device 2 includes a closed-curve structure at a position where, when the power reception device 2 is installed in an area where non-contact power feeding is possible, the closed-curve structure interlinks with a magnetic field generated by a transmission antenna, the closed-curve structure does not form a short loop.

Hereinafter, in the power reception device 2 according to the first embodiment, an insulation measure applied to prevent the closed-curve structure from forming a short loop will be described specifically.

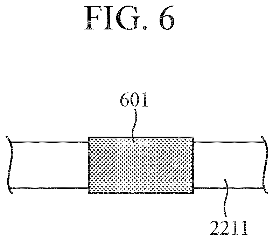

The insulation measure applied to the power reception device 2 in the first embodiment is only required to prevent the closed-curve structure from forming a short loop, and specific measures are not limited to one. Hereinafter, insulation measures applied to the power reception device 2 in the first embodiment will be described with several examples by referring to FIG. 6.

Note that, for convenience of description, only a part of the closed-curve structure included in the power reception device 2 is illustrated in FIG. 6.

FIG. 6 is a diagram illustrating an exemplary concept of a closed-curve structure in which an insulation measure is applied so as not to form a short loop in the first embodiment.

In FIG. 6, as an example, an insulation measure is applied so that a metal frame 2211 (for example, see the television 221 in FIG. 4) does not form a short loop.

Specifically, a part of the metal frame 2211 includes an insulating member 601, and thereby a part of the closed-curve structure is formed of an insulating material.

The metal frame 2211 does not form a short loop since a part of the closed-curve structure is the insulating member 601 which is an insulating material. That is to say, even when the power reception device 2 is installed at a position where power can be received, no current flows through the closed-curve structure.

As a result, it is possible to prevent reduction in the power transmission efficiency from the transmission antenna 12 to the reception antenna 211.

Note that, in FIG. 6, an insulation measure is applied to the metal frame 2211 by including the insulating member 601 as a part of the metal frame 2211 and thereby forming a part of the closed-curve structure using an insulating material; however, this is merely an example. For example in a case where a conductive paint applied on a member included in the power reception device 2 or a conductive tape attached on the member has a closed curve shape, a part of the closed curve shape may be formed of an insulating paint or an insulating tape.

It is only required that the insulation measure as described above is applied to at least a part of the closed-curve structure.

As described above, in the first embodiment, although the power reception device 2 includes the closed-curve structure at a position where, when the power reception device 2 is installed in an area where non-contact power feeding is possible, the closed-curve structure interlinks with a magnetic field generated by the transmission antenna 12, the closed-curve structure does not form a short loop. As a result, it is possible to prevent a decrease in the power transmission efficiency in the power reception device 2.

In the prior art, as described above, for example a magnetic sheet prevents reduction in the power transmission efficiency.

However, for example, if the back side of the reception antenna 211 is entirely covered with a magnetic sheet, this may increase the cost of the power reception device 2. In addition, if the back side of the reception antenna 211 is entirely covered with a magnetic sheet, the spread of the magnetic field distribution in the direction of the transmission antenna 12 provided at a position opposite to the reception antenna 211 becomes narrow, and this contributes to a shorter power transmission distance.

Meanwhile, there is also known a technology in which a magnetic material is installed on the entire back side of the reception antenna 211 to prevent the metal body from affecting power transmission and to be used as a core material of the reception antenna 211; however, in this technology, energy loss such as hysteresis loss by the magnetic material occurs.

On the other hand, in the power reception device 2 according to the first embodiment, the insulation measure as described by referring to FIG. 6 is applied to the closed-curve structure so that no induced current flows through the closed-curve structure. In the insulation measure, for example, methods such as covering the entire closed-curve structure with a magnetic sheet are not adopted. Therefore, the cost of the power reception device 2 can be reduced. Moreover, since no magnetic sheet is required, energy loss such as hysteresis loss by a magnetic sheet does not occur, and thereby power consumption can be reduced. Furthermore, since no magnetic sheet is required, it is easier to configure a non-contact power feeding system at a power transmission frequency in the order of MHz or higher, and thus the power reception device 2 can be reduced in size, weight, or cost. In a case where there is a magnetic sheet having a large area below the reception antenna 211, the inductance becomes large, thereby making it difficult to increase the frequency. Note that the expression "there is a magnetic sheet below" means that the magnetic sheet is on the back side of the reception antenna 211, which is on the opposite side to the transmission antenna 12 with respect to the reception antenna 211.

In addition, since no magnetic sheet is required, it is possible to ensure a wide magnetic field distribution in the direction of the transmission antenna 12 to which the reception antenna 211 is facing, and thus the power transmission distance can be increased.

The power reception device 2 to which an insulation measure is applied according to the first embodiment described above is not limited to a non-contact power feeding system in which the power reception device 2 and the power transmitter 1 are in a one-to-one relationship, but is also applicable to various forms of non-contact power feeding systems, several examples will be described below.

For example, the power reception device 2 is applicable to a non-contact power feeding system in which multiple transmission antennas can supply power to a single power reception device. Note that also in the examples described below, it is assumed that the power reception device 2 includes a closed-curve structure, at least a part of which is formed of a conductive material.

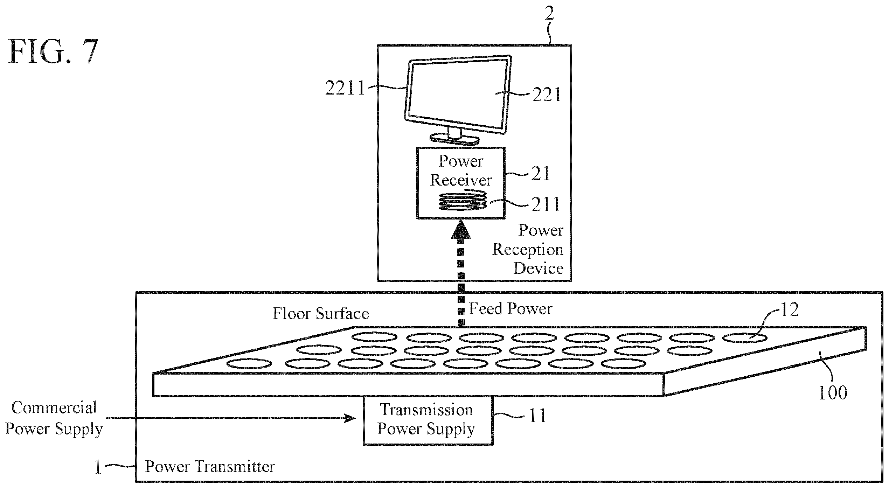

FIG. 7 is a diagram illustrating an exemplary concept of a configuration of a non-contact power feeding system including multiple transmission antennas. Note that in FIG. 7, a home electric appliance 22 is a television 221 as the one illustrated in FIG. 4.

In the non-contact power feeding system illustrated in FIG. 7, a power transmitter 1 is installed in a floor 100 and includes multiple transmission antennas 12.

A transmission power supply 11 receives power from commercial power, supplies high-frequency power to any one of the multiple transmission antennas 12, and the transmission antenna 12 that has been supplied with the high-frequency power generates a magnetic field in space. When the power reception device 2 is installed in an area where power can be supplied from any one of the multiple transmission antennas 12, the power reception device 2 receives power in a non-contact manner.

Whichever transmission antenna 12, among the multiple transmission antennas 12, power is supplied from, it is possible to prevent a reduction in the power transmission efficiency in the power reception device 2 since the power reception device 2 includes a closed-curve structure to which an insulation measure is applied so as not to form a short loop, as described by referring to FIG. 6.

Alternatively, for example, the power reception device 2 can be applied to a power reception device including multiple reception antennas 211 in a non-contact power feeding system.

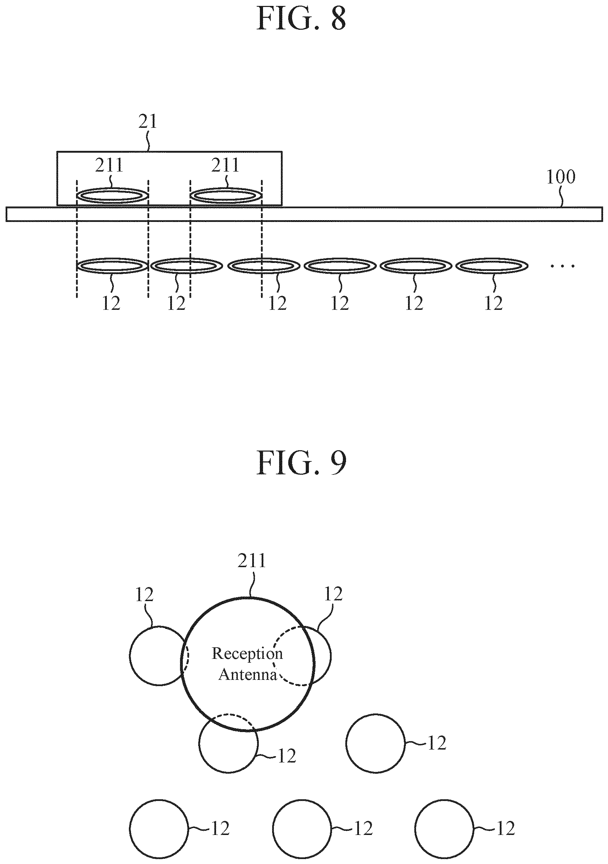

FIG. 8 is a diagram illustrating an exemplary concept of a configuration of a non-contact power feeding system including a power reception device including multiple reception antennas 211.

In the non-contact power feeding system illustrated in FIG. 8, multiple transmission antennas 12 are installed in a floor 100. In FIG. 8, it is assumed that the power reception device includes two (of two systems) reception antennas 211. This is merely an example, and the power reception device may include three or more (of three or more systems) reception antennas 211. Note that, in FIG. 8, illustration of a home electric appliance 22 and a transmission power supply 11 is omitted, and the floor 100 is illustrated in a cross section.

A transmission power supply receives power from commercial power, supplies high-frequency power to any one of the multiple transmission antennas 12, and the transmission antenna 12 that has been supplied with the high-frequency power generates a magnetic field in space. When the power reception device is installed in an area where power can be supplied from any one of the multiple transmission antennas 12, the power reception device receives power in a non-contact manner. At this point, for example, each of the reception antennas 211 receives power depending on the positional relationship with the multiple transmission antennas 12. Specifically, for example, each of the reception antennas 211 receives power if the area facing a transmission antenna 12 is equal to or larger than a preset threshold value.

In a case where the power reception device 2 includes a single (of one system) reception antenna 211, only this reception antenna 211 of a single system performs non-contact power feeding with a transmission antenna 12 provided at a position where power can be received, and thus an area where power can be received becomes narrow. On the other hand, with the power reception device 2 including the multiple reception antennas 211 as in the non-contact power feeding system illustrated in FIG. 8, an area where power can be received becomes wide.

Even in the power reception device including the multiple reception antennas 211 as illustrated in FIG. 8, it is possible to prevent the power transmission efficiency of the power reception device 2 from decreasing by applying an insulation measure so as not to form a short loop in the closed-curve structure as described by referring to FIG. 6.

Further alternatively, for example, the power reception device 2 can be applied to a non-contact power feeding system in which the area of a reception antenna 211 is larger than the area of a transmission antenna 12.

FIG. 9 is a diagram illustrating a concept of an exemplary configuration of a non-contact power feeding system in which the area of a reception antenna 211 is larger than the area of a transmission antenna 12.

FIG. 9 illustrates a diagram of a state where the reception antenna 211 is installed at a position facing transmission antennas 12 as viewed from above the reception antenna 211. In FIG. 9, as an example, the reception antenna 211 and the transmission antennas 12 are circular antennas, and the radius of the reception antenna 211 is equal to or larger than the diameter of the transmission antenna 12. Note that, in FIG. 9, illustration of a home electric appliance 22 and a transmission power supply 11 is omitted.

In the non-contact power feeding system as illustrated in FIG. 9, with the area of the reception antenna 211 being larger than the area of the transmission antenna 12, the reception antenna 211 and the transmission antennas 12 can overlap over a wide area. In addition, by reducing the area of the transmission antenna 12, it becomes possible to prevent mutual interference between adjacent transmission antennas and to feed power to the reception antenna 211 with a high power transmission efficiency.

Even in the power reception device 2 in which the area of the reception antenna 211 is larger than the area of the transmission antenna 12, since an insulation measure is applied to the power reception device 2 so as not to form a short loop in the closed-curve structure as described by referring to FIG. 6, it is possible to prevent the power transmission efficiency of the power reception device 2 from decreasing.

As described above, according to the first embodiment, the power reception device 2 includes: the reception antenna 211 capable of receiving power from the transmission antenna 12 in a non-contact manner; and a closed-curve structure which does not form a short loop and at least a part of which is formed of a conductive material, the closed-curve structure being formed at a position where, when the reception antenna 211 is installed at a position where power can be received from the transmission antenna 12, the closed-curve structure interlinks with a magnetic field generated by the transmission antenna 12. Therefore, even in a case where the power reception device 2 that receives power by non-contact power feeding includes the closed-curve structure at the position where, when the power reception device 2 is installed in an area where non-contact power feeding is possible, the closed-curve structure interlinks with a magnetic field generated by the transmission antenna 12, the closed-curve structure does not form a short loop. As a result, it is possible to prevent a decrease in the power transmission efficiency in the power reception device 2.

Note that the present invention may include modifications of any component of the embodiment, or omission of any component of the embodiment within the scope of the present invention.

### INDUSTRIAL APPLICABILITY

In a power reception device according to the present invention, a closed-curve structure which is included in the power reception device, and which is formed at a position where the closed-curve structure interlinks with a magnetic field generated by a transmission antenna, does not form a short loop, and thus the power reception device according to the present invention is applicable to power reception devices for receiving power by non-contact power feeding.

### REFERENCE SIGNS LIST

1: power transmitter, 2: power reception device, 3: external power supply, 11: transmission power supply, 12: transmission antenna, 21: power receiver, 211: reception antenna, 212: rectifier circuit, 22: home electric appliance, 100: floor, 201: lines of magnetic force, 221: television, 222: PC, 223: desk lamp, 224: vacuum cleaner, 225: table, 226: bag, 2211: metal frame, 601: insulating member

## Claims

1. A power reception device comprising:
at least one reception antenna capable of receiving power from a transmission antenna in a non-contact manner; and
a closed-curve structure which does not form a short loop and at least a part of which is formed of a conductive material, the closed-curve structure being formed at a position where, when the reception antenna is installed at a position where power can be received from the transmission antenna, the closed-curve structure interlinks with a magnetic field generated by the transmission antenna.

2. The power reception device according to claim 1,
wherein the closed-curve structure is formed of a paint applied to the power reception device, and at least a part of the closed-curve structure is formed of an insulating paint, thereby not forming the short loop.

3. The power reception device according to claim 1,
wherein the closed-curve structure is formed of a member included in the power reception device, and at least a part of the closed-curve structure is formed of an insulating member, thereby not forming the short loop.

4. The power reception device according to claim 1,
wherein the closed-curve structure is a frame that defines a first surface that comes into contact with a second surface when the power reception device is installed on the second surface, the second surface being where the reception antenna can receive power from the transmission antenna.

5. The power reception device according to claim 1, further comprising:
a pedestal,
wherein the closed-curve structure is a frame of the pedestal.

6. The power reception device according to claim 1,
wherein the at least one reception antenna includes a plurality of reception antennas.

7. The power reception device according to claim 1,
wherein the reception antenna has an area larger than an area of the transmission antenna.
